# EUROPÄISCHE PATENTSCHRIFT

(11) **EP 1 413 612 B1**
(45) Veröffentlichungstag und Bekanntmachung des Hinweises auf die Patenterteilung: **23.08.2006**
(21) Anmeldenummer: 03023161.7
(22) Anmeldetag: 13.10.2003
(51) Int. Cl.: C09D 163/00, C09D 5/00, C08G 59/14, C08G 59/40

(54) **Addukte von Epoxidharzen und von Phosphor abgeleiteten Säuren sowie Verfahren zu deren Herstellung**
Adducts out of epoxy resins and acids derived from phosphorus and a process for producing those adducts
Adduits de resines epoxydes et d'acides dérivés de phosphore et procédé pour la préparation d'adduits

(30) Priorität: 21.10.2002 AT 15972002
(43) Veröffentlichungstag der Anmeldung: 28.04.2004
(73) Patentinhaber: Cytec Surface Specialties Austria GmbH, 8402 Werndorf (AT)
(72) Erfinder: Feola, Roland, Dr., 8045 Graz (AT); Gmoser, Johann, 8045 Graz (AT)
(74) Vertreter: Deckers, Hellmuth Alexander

(56) Entgegenhaltungen:
- EP-A- 0 288 943
- EP-A- 0 292 317
- US-A- 4 018 848
- US-A- 4 256 844
- US-A- 4 360 613
- US-A- 4 720 403
- US-A- 4 801 628
- US-A- 4 992 525

## Beschreibung

Die Erfindung betrifft Addukte von Epoxidharzen und von Phosphor abgeleiteten Säuren sowie Verfahren zu deren Herstellung.

Epoxidharze sind bekannt für ihre guten Korrosionsschutzeigenschaften, daher werden sie häufig für Grundierungen im Metallbereich verwendet. Ebenso ist seit langem die korrosionsinhibierende Wirkung der Phosphorsäure bekannt. Auch die Vereinigung von beiden Substanzklassen in einem Harzsystem ist nicht neu.

Aus dem Dokument US 4,992,525 sind kationische Harze bekannt, die erhalten werden durch Reaktion von ortho-Phosphorsäure mit Monoepoxiden oder Polyphosphorsäure mit zunächst einem Monoalkohol und anschließend mit einem Monoepoxid im ersten Schritt und Umsetzung der so erhaltenen Ester im zweiten Schritt mit einer Mono- oder Poly-Epoxidverbindung unter Verbrauch der Säurefunktionalität bis zu einer Restsäurezahl von weniger als 5 mg/g, worauf die so erhaltenen epoxidfunktionellen Produkte des zweiten Schritts im letzten Schritt mit primären oder sekundären Aminen oder Mischungen aus tertiären Aminen und Säuren reagiert werden, oder an die Hydroxylgruppen der Produkte des zweiten Schritts basische oder ungesättigte Monoisocyanate addiert werden.

Aus dem Dokument US 4,256,844 sind brandgeschützte Strukturschäume bekannt, zu deren Herstellung Phosphorsäure mit mono- oder polyfunktionellen Epoxiden reagiert wird, die Methylol- oder Alkoxymethylgruppen enthalten. Hierbei handelt es sich um von substituierten Phenolen abgeleitete Novolake, die mit Epichlorhydrin zu den von diesen Novolaken abgeleiteten Epoxidharzen umgesetzt werden, und deren Epoxidgruppen anschließend durch Reaktion mit Phosphorsäure im wesentlichen vollständig verbraucht werden.

Das Dokument US 4,720,403 betrifft einen Primer, der auf einer "Epoxy-Phosphat-Dispersion" beruht, deren Herstellung wiederum in US 4,425,451 beschrieben ist. Aus diesem Schriftstück sind in Wasser dispergierbare polymere Salze von Epoxid-Phosphorsäureestern bekannt, wobei diese hergestellt werden durch Umsetzung eines harzartigen Polyepoxids mit mindestens 1,4 Oxirangruppen je Molekül mit weniger als 0,9 mol ortho-Phosphorsäure auf 1 mol Oxirangruppen; es wird ein Monoester gebildet, der mit einem flüchtigen Amin zur Salzbildung umgesetzt wird.

Das Dokument US 4,018,848 betrifft eine schnellhärtende Beschichtungszusammensetzung, die eine Mischung ist aus einem niedermolekularen Epoxidharz, einem flüssigen Stickstoffharz- oder Phenolharz-basierenden Vernetzer, einem flexibilisierenden Polyol, einer organischen oder anorganischen monomeren oder polymeren Säure, die als Reaktand oder als Katalysator wirken kann, und einem oberflächenaktiven Mittel. Dabei wird erwähnt, daß nicht näher charakterisierte Umsetzungsprodukte von Phosphorsäure mit Epoxidharzen sowohl die Funktion eines Katalysators als auch die eines Reaktanden erfüllen können.

Aus dem Dokument EP 0 292 317 A1 ist eine Mischung bekannt, die ein Phenolharz, ein Epoxidharz und ein Addukt aus einem Epoxidharz und einer Phosphorsäure oder Phosphonsäure enthält. Über die Stoffmengenverhältnisse von Säure und Epoxidharz im Addukt sind keine Aussagen gemacht.

Aus dem Dokument EP 0 2898 943 A2 schließlich ist ein Verfahren zur Herstellung von phosphorsäuremodifizierten Mono-, Di- oder Polyepoxidverbindungen bekannt, wobei durch Reaktion von ortho-Phosphorsäure mit Monoepoxiden oder Polyphosphorsäure mit zunächst einem Monoalkohol und anschließend mit einem Monoepoxid im ersten Schritt und Umsetzung der so erhaltenen Ester im zweiten Schritt mit einer Mono- oder Poly-Epoxidverbindung unter Verbrauch der Säurefunktionalität bis zu einer Restsäurezahl von weniger als 5 mg/g Reaktionsprodukte erhalten werden mit einem spezifischen Epoxidgruppengehalt von höchstens 833 mmol/kg ("Epoxidäquivalentgewicht" von mindestens 1200 g/mol).

Bei den bisher bekannten Verfahren zur Herstellung von Epoxidharz-Phosphorsäure-Addukten ergibt sich ein Problem durch die unkontrollierte Reaktion beider Komponenten, die entweder zu hochmolekularen Reaktionsprodukten oder nicht umgesetzter Phosphorsäure führt. So ist es beispielsweise nicht möglich, ein Epoxidharz mit einem definierten Gehalt an Epoxidgruppen mit Phosphorsäure in einem Stoffmengenverhältnis von 1 mol Phosphorsäure pro 1 mol Epoxidgruppen derart gezielt umzusetzen, ohne daß ein beträchtlicher Anteil der Phosphorsäure unreagiert zurückbleibt.

Geht man mit der Menge Phosphorsäure pro Epoxidgruppe unter das Stoffmengenverhältnis 1 : 1 zurück, so bleibt zwar am Ende weniger freie Phosphorsäure übrig, dafür wird der unkontrollierte Aufbau des Polymerisationsgrades des Addukts umso höher, was leicht zum Gelieren des Ansatzes führen kann und zu völlig unbrauchbaren Produkten führen kann. Der Aufbau des Addukts ist deswegen so schwer kontrollierbar, da er stark abhängt vom verwendeten Lösemittel, der Art des Epoxidharzes, der Umsetzungstemperatur, der Zugabezeit und vermutlich noch von einigen anderen Faktoren wie der Reaktorgeometrie. Andererseits führt es aber auch nicht zum Ziel, das Stoffmengenverhältnis von Phosphorsäure zu Epoxidgruppen auf mehr als 1 : 1 zu steigern. Damit wird zwar der hochmolekulare Aufbau bei der Adduktbildung gebremst, andererseits bleibt aber noch mehr freie Phosphorsäure übrig. Reste von freier Phosphorsäure im System sind unerwünscht, da sie die Neutralisation des Reaktionsproduktes mit Amin (zur Erzielung der Wasserverdünnbarkeit) erschweren und damit indirekt zu einer schlechteren Wasserlöslichkeit des Produktes führen. Reste von freier Phosphorsäure stören aber auch im ausgehärteten Lackfilm insbesondere durch Flächenstörungen und Ausschwimmen.

Es besteht daher die Aufgabe, solche Addukte von Epoxidharzen und von Phosphor abgeleiteten Säuren bereitzustellen, die einen definierten, einstellbaren Polymerisationsgrad besitzen und bei deren Herstellung der Massenanteil an unreagierter Säure in der Produktmischung weniger als 5 % beträgt.

Überraschenderweise wurde gefunden, daß man die genannte Aufgabe lösen kann, indem man die Reaktion mehrstufig führt. In einer ersten Stufe wird dabei ein Epoxidharz mit einem definierten spezifischen Epoxidgruppengehalt aufgebaut. In einer separaten Reaktion wird ein Ester durch Umsetzung eines niedermolekularen flüssigen Epoxidharzes (z.B. eines Diepoxidharzes auf Basis von Bisphenol A mit einer molaren Masse von ca. 380 g/mol) mit einer von Phosphor abgeleiteten Säure hergestellt, wobei sich hier ein Stoffmengenverhältnis von Säure zu Epoxidgruppen von unter 0,3 : 1 als besonders günstig erweist.

In der dritten Stufe werden die beiden Vorprodukte gemischt und dann bei erhöhter Temperatur bis zu einem praktisch epoxidgruppenfreien Harz reagiert (spezifischer Epoxidgruppengehalt unter 100 mmol/kg). Anschließend wird das Harz beispielsweise durch Zugabe von Aminen neutralisiert und durch Zusatz von Wasser auf einen Festkörper-Massenanteil eingestellt, der ein bequemes Handhaben ermöglicht. Es ist weiter möglich, dem Harz entweder vor, aber gegebenenfalls auch nach der Neutralisation eine Härtungskomponente zuzumischen, die durch Reaktion mit Hydroxylgruppen vernetzt (Melaminharze, Phenolharze, blockierte Isocyanate). Auf diese Weise gelangt man zu hitzehärtbaren (Einbrenn-) Systemen.

Ohne Zusatz von Härtern sind die erfindungsgemäßen Addukte nur physikalisch trocknend. Dies kann aber in manchen Anwendungsbereichen, entsprechend hohe molare Masse des Addukts vorausgesetzt, durchaus ausreichend sein. Außerdem können dem modifizierten Harz bei Bedarf auch noch Additive, Emulgierhilfsmittel etc. zugemischt werden.

Die Erfindung betrifft daher ein Verfahren zur Herstellung von Addukten **ABC**, die nach Neutralisation in Wasser dispergierbar sind, wobei
- in einem ersten Schritt ein Umsetzungsprodukt **BC** von einer Epoxidverbindung **B** mit einer von Phosphor abgeleiteten Säure **C** ausgewählt aus anorganischen sauren Phosphorverbindungen **C1** und organischen Phosphonsäuren **C2** hergestellt wird, wobei die Verbindungen **B** und **C** in solchen Mengen eingesetzt werden, daß das Stoffmengenverhältnis von aciden Wasserstoffatomen in **C** zu Epoxidgruppen in **B** 0,3 bis 0,9 zu 1 beträgt, und das Umsetzungsprodukt BC mindestens eine saure Phosphorsäureestergruppe oder Phosphonsäureestergruppe pro Molekül enthält,
- in einem zweiten Schritt das Umsetzungsprodukt **BC** mit einer Epoxidverbindung **A** zu einem Addukt **ABC** umgesetzt wird, wobei die Reaktion so lange geführt wird, bis der spezifische Epoxidgruppengehalt, bezogen auf den Festkörper der Reaktionsmischung, weniger als 100 mmol/kg beträgt,
wobei die Epoxidverbindungen **A** und **B** unabhängig voneinander aus Di- und Polyepoxidverbindungen ausgewählt werden.

Die Erfindung betrifft ebenfalls Zusammensetzungen enthaltend Wasser und in Wasser dispergierte neutralisierte Addukte **ABC**, die einen Massenanteil, bezogen auf die Masse des Addukts, von maximal 5 % an nicht umgesetzter Säure **C** enthalten.

Bevorzugt weisen die Addukte **ABC** eine Säurezahl von ca. 10 mg/g bis ca. 70 mg/g auf. Sie sind im wesentlichen frei von Epoxidgruppen, d. h. ihr spezifischer Epoxidgruppengehalt liegt im allgemeinen bei maximal 100 mmol/kg, bevorzugt bei maximal 50 mmol/kg, und insbesondere bei maximal 20 mmol/kg. Der Massenanteil an Phosphor in den Addukten beträgt bevorzugt zwischen 0,8 % und 4 %, besonders bevorzugt 1,0 % bis 3,5 %, und insbesondere 1,3 % bis 3,3 %. Die Addukte weisen bevorzugt einen Staudinger-Index von 8,0 cm³/g bis 20,0 cm³/g, besonders bevorzugt 9,0 cm³/g bis 18,0 cm³/g, und insbesondere 10 cm³/g bis 17 cm³/g auf.

Die Säurezahl ist gemäß DIN 53 402 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Die früher so bezeichnete "Grenzviskositätszahl", nach DIN 1342, Teil 2.4, "Staudinger-Index" ***J***_{g} genannt, ist der Grenzwert der Staudinger-Funktion *J*ᵥ bei abnehmender Konzentration und Schubspannung, wobei *J*ᵥ die auf die Massenkonzentration β_{B} = *m*_{B} / *V* des gelösten Stoffes B (mit der Masse *m*_{B} des Stoffes im Volumen *V* der Lösung) bezogene relative Viskositätsänderung ist, also *J*ᵥ = (ηᵣ-1) / β_{B}. Dabei bedeutet η_{*r*} - 1 die relative Viskositätsänderung, gemäß ηᵣ - 1 = (η - η_{*s*}) / ηₛ. Die relative Viskosität ηᵣ ist der Quotient aus der viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für ***J*** verwendete Einheit ist "cm³/g"; früher häufig "dl/g". Die Bestimmung des Staudinger-Index erfolgt hier in Dimethylformamid als Lösungsmittel.

In der ersten Stufe wird ein Addukt von Epoxidverbindungen **B** und anorganischen von Phosphor abgeleiteten Säuren **C1** oder Phosphonsäuren **C2** hergestellt, wobei jeweils solche Mengen der Ausgangsstoffe eingesetzt werden, daß das Stoffmengenverhältnis zwischen aciden Wasserstoffatomen der Säure **C** und Epoxidgruppen der Epoxidverbindungen **B** 0,3 bis 0,9 mol/mol beträgt.

Die Säurezahl der Addukte BC beträgt bevorzugt 5 mg/g bis 200 mg/g, besonders bevorzugt 8 mg/g bis 180 mg/g, und insbesondere 10 mg/g bis 160 mg/g. Ihr Staudinger-Index *J*₀ beträgt bevorzugt 2 cm³/g bis 18 cm³/g; besonders bevorzugt 3 cm³/g bis 16 cm³/g, und insbesondere 4 cm³/g bis 14 cm³/g. Die Reaktion wird bevorzugt in einem protischen Lösungsmittel oder Lösungsmittelgemisch durchgeführt, wobei die Epoxidverbindung **B** und die Säure C jeweils für sich in einem organischen Lösungsmittel gelöst werden. Die bevorzugte Reaktionstemperatur liegt zwischen Raumtemperatur (20 °C) und 90 °C. Die Umsetzung wird so lange geführt, bis die Säurezahl konstant bleibt. Der spezifische Gehalt an Epoxidgruppen in der Reaktionsmischung, bezogen auf die Masse des Feststoffs ist dann nahezu null. Das Lösungsmittel wird dann durch Destillation unter vermindertem Druck weitgehend abgezogen.

Die Addukte **BC** werden in der zweiten Stufe mit Epoxidverbindungen **A** umgesetzt, wobei die Reaktionstemperatur bevorzugt bei 100 °C bis 180 °C liegt. Dabei wird die Umsetzung solange durchgeführt, bis der spezifische Gehalt an Epoxidgruppen, bezogen auf die Masse des Festharzes, bei weniger als 100 mmol/kg liegt.

Die Epoxidharze **A** und **B** werden unabhängig voneinander aus Di- oder Polyepoxidverbindungen ausgewählt, die in bekannter Weise durch Reaktion von Epichlorhydrin mit aromatischen oder (cyclo)aliphatischen Verbindungen mit zwei oder mehr Hydroxylgruppen pro Molekül erhältlich sind (Taffy-Prozeß), oder durch Umsetzung von Diepoxiden oder Polyepoxiden mit den genannten aromatischen oder (cyclo)aliphatischen Verbindungen mit zwei oder mehr Hydroxylgruppen pro Molekül (Advancement-Reaktion) gewonnen werden können. Bevorzugt werden Epoxidharze auf Basis von aromatischen Dihydroxyverbindungen, wie Bisphenol A, Bisphenol F, Dihydroxydiphenylsulfon, Hydrochinon, Resorein, 1,4-Bis[2-(4-hydroxyphenyl)-2-propyl]benzol, oder aliphatischen Dihydroxyverbindungen wie Hexandiol-1,6, Butandiol-1,4, Cyclohexandimethanol, oder Oligo- und Poly-Propylenglykol mit mittleren Polymerisationsgraden zwischen 3 und 40. Der spezifische Epoxidgruppengehalt der Epoxidharze beträgt unabhängig voneinander für die Epoxidharze **A** und **B** jeweils bevorzugt 0,4 mol/kg bis 7 mol/kg, insbesondere 0,6 mol/kg bis 6 mol/kg. In einer bevorzugten Ausführungsform werden für **A** und **B** jeweils Diepoxidverbindungen eingesetzt. Besonders bevorzugt werden Epoxidharze auf Basis von Bisphenol A und Bisphenol F sowie deren Mischungen.

Als Säurekomponente **C** lassen sich anorganische saure Phosphorverbindungen **C1** oder organische Phosphonsäuren **C2** einsetzen, die jeweils mindestens zwei acide H-Atome aufweisen, die direkt oder über ein Sauerstoffatom an ein Phosphoratom gebunden sind. Die anorganischen von Phosphor abgeleiteten Säuren **C1** sind dabei ausgewählt aus ortho-Phosphorsäure H₃PO₄, der Diphosphorsäure H₄P₂O₇, der Triphosphorsäure H₅P₃O₁₀ und den höheren Homologen (Oligomeren), der phosphorigen Säure H₃PO₃, der diphosphorigen Säure H₄P₂O₅ sowie deren höheren Homologen, sowie der unterphosphorigen Säure H₃PO₂ und deren höheren Homologen. Besonders geeignet sind ortho-Phosphorsäure, Gemische von Di- und höheren Oligomeren der ortho-Phosphorsäure, phosphorige Säure und deren höhere Oligomere. Die organischen Phosphonsäuren C2 sind insbesondere Alkanphosphonsäuren R¹-PO₃H₃, aromatische Phosphonsäuren R²-PO₃H₃, und die entsprechenden Phosphonigsäuren R¹-PO₂H₂ und R²-PO₂H₂, wobei R¹ ein linearer, verzweigter oder cyclischer Alkylrest mit 1 bis 20 Kohlenstoffatomen ist, und R² ein gegebenenfalls substituierter aromatischer Rest mit 6 bis 20 Kohlenstoffatomen ist. Besonders geeignet sind Methanphosphonsäure und Benzolphosphonsäure.

Zur Herstellung von Einkomponenten-Lacken wird ein Härter (Aminoplastharz oder blockiertes Isocyanat) dem Harz ABC zugegeben, nach gründlicher Homogenisierung bei 80 °C bis 110 °C, je nach der Aktivierungstemperatur des Härters, werden die restlichen Säuregruppen des Harzes durch Zugabe eines Neutralisationsmittels, bevorzugt eines Amins, zumindest teilweise (bevorzugt 20 % bis 80 %) in die Salzform überführt. Die neutralisierte Harzmischung kann dann in Wasser dispergiert werden.

Zur Herstellung von Zweikomponenten-Lacken wird das Harz alleine neutralisiert und in Wasser dispergiert. Diese Dispersion kann dann mit unblockierten mehrfunktionellen Isocyanaten, die sowohl in bekannter Weise hydrophiliert sein können, als auch in unmodifizierter Form vorliegen können (wobei aliphatische Isocyanate bevorzugt werden), unmittelbar vor der Verarbeitung vermischt werden. Dabei kann die Dispersion des Addukts **ABC** auch als Emulgator für das nichtmodifizierte unblockierte Isocyanat wirken. Zur Herstellung von Zweikomponentenlacken können in ähnlicher Weise auch dafür geeignete Aminoplastharze wie z. B. wasserverdünnbare Melaminharze verwendet werden.

Die erfindungsgemäß hergestellten Addukte **ABC** lassen sich auch als Bindemittel für physikalisch trocknende Lacke verwenden.

Lacke, die mit diesen Bindemitteln formuliert werden, sind besonders geeignet für die Beschichtung von Blechen aus unedlen Metallen. Sie bewirken einen guten Schutz gegen Korrosion, insbesondere beim Kontakt der beschichteten Metalle mit salzhaltigen wäßrigen Medien.

Die Erfindung wird durch die nachfolgenden Beispiele weiter erläutert, ohne sie deshalb in ihrem Umfang beschränken. In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung). Die angegebenen Werte für den Staudinger-Index *J*₀ wurden in Dimethylformamid als Lösungsmittel gemessen. Der Festkörper-Massenanteil wird als Verhältnis der ausgewogenen Masse zu Masse der Einwaage in % (cg/g) angegeben.

Im weiteren werden die folgenden Abkürzungen verwendet:
- SEG: spezifischer Gehalt ***n***_{EP} /***m***_{B} an Epoxidgruppen (Stoffmenge der Epoxidgruppen ***n***_{EP} in einer Probe B, bezogen auf deren Masse ***m***_{B} bzw. auf die Masse des Festharzes in der Probe; entspricht dem Kehrwert des sogenannten "Epoxidäquivalentgewichts" EEW)
- EP 1: Diepoxidharz auf Basis von Bisphenol A (SEG = 5,26 mol/kg; "Epoxidäquivalentgewicht" EEW ca. 190 g/mol)
- EP 2: Diepoxidharz auf Basis von Polypropylenglykol (SEG = 3,13 mol/kg; EEW ca. 320 g/mol)
- EP 3: Diepoxidharz, flexibilisiert durch einen aliphatischen Anteil (® Cardolite NC-514, Fa.
Cardanol, SEG = 2,86 mol/kg; EEW ca. 350 g/mol).
- EP 1001: ® Epikote 1001 (Deutsche Shell Chemie GmbH, Epoxidharz des Typs 1 auf Basis von Bisphenol A (SEG = 2,06 mol/kg))
- EP 1004: ® Epikote 1004 (Epoxidharz des Typs 4 auf Basis von Bisphenol A (SEG = 1,07 mol/kg))
- EP 1007: ®Epikote 1007 (Epoxidharz des Typs 7 auf Basis von Bisphenol A (SEG = 0,62 mol/kg))
- HDGE: Hexandioldiglycidyläther, SEG = 8,68 mol/kg
- DER 736: Diepoxidharz auf Basis von Polypropylenglykol (Fa. DOW Chemical) SEG = 5,26 mol/kg, EEW = ca. 190 g/mol
- MEK: Methyläthylketon
- IP: Isopropanol
- MP: Methoxypropanol
- DMEA: Dimethyläthanolamin
- CE: ® Cardura E 10, Fa. Shell Chemicals BV
- MEKO: Methyläthylketoxim
- DBTL: Dibutylzinndilaurat
- ® Desmodur N 3390: trimerisiertes, aliphatisches Isocyanat auf Basis von 1,6-Hexamethylendiisocyanat, 90 % ige Lösung in Butylacetat, Fa. Bayer AG

### Beispiele:

### Epoxidharzkomponente E 1

Eine Mischung von 380 g EP 1 (***n***_{EP} = 2,0 mol), 194 g Bisphenol A (0,85 mol) und 108 g EP 3 (*n*_{EP} = 0,31 mol) wurde unter Rühren auf 120 °C erhitzt. Es wurden 1,2 g Triphenylphosphin als Katalysator zugegeben, wodurch eine exotherme Reaktion einsetzte. Die Reaktionsmischung wurde weiter bei 140 °C gehalten, bis der spezifische Epoxidgruppengehalt in der Mischung 1,0 bis 1,05 mol/kg betrug (EEW von 950 bis 1000 g/mol). Der Staudinger-Index *J*₀ des Harzes betrug 10,2 cm³/g. Die Masse wurde anschließend auf 115 °C gekühlt und durch Zusatz von MP auf einen Festkörper-Massenanteil von 80 % verdünnt. Der Festkörper-Massenanteil wurde durch Trocknung einer Probe bei 125 °C während einer Stunde in einem Umluftofen bestimmt.

### Epoxidharzkomponente E 2

Gemäß der oben beschriebenen Verfahrensweise wurden 380 g EP 1 (***n***_{EP} = 2,0 mol) und 96 g EP 2 (***n***_{EP} = 0,30 mol) mit 194 g Bisphenol A und 1,2 g Triphenylphosphin als Katalysator umgesetzt, bis ein spezifischer Epoxidgruppengehalt von 1,0 bis 1,05 mol/kg erreicht war (EEW 950 bis1000 g/mol), das Reaktionsprodukt wurde mit MP auf einen Festkörper-Massenanteil von ca. 80 % verdünnt. Der Staudinger-Index *J*₀ des Harzes betrug 9,9 cm³/g.

Gemäß den Angaben in der Tabelle 1 wurden weitere Epoxidharz-Komponenten E 3 bis E 7 gemäß der bei E1 beschriebenen Verfahrensweise hergestellt, wobei die eingesetzten Epoxidharze zum Teil käuflich erworben wurden (® Epikote 1001, 1004, 1007, Fa. Deutsche Shell Chemie GmbH). Die Epoxidharz-Komponenten E 4 und E 5 wurden hergestellt, indem wie oben jeweils eine Menge des in der Tabelle 1 erstgenannten Epoxidharzes mit 2 mol Epoxidgruppen und eine Menge des zweitgenannten Epoxidharzes mit 0,3 mol Epoxidgruppen, 0,85 mol Bisphenol A und 1,2 g Triphenylphosphin als Katalysator umgesetzt wurden. Die Bedeutung der Abkürzungen für die Epoxidharze ist in der Zusammenstellung der Abkürzungen erklärt.

**Tabelle 1 Epoxidharz-Komponenten**

| Beispiel | Epoxidharz | SEG in mol/kg | EEW in g/mol | Staudinger-Index *J*₀ in cm³/g |
|---|---|---|---|---|
| E 3 | ®Epikote 1001 (Typ 1) | 2,11 | 475 | 5,1 |
| E 4 | EP 1/EP 2 | 0,93 | 1080 | 11,2 |
| E 5 | EP 1/EP 3 | 0,57 | 1770 | 12,8 |
| E 6 | ®Epikote 1004 (Typ 4) | 1,05 | 950 | 9 |
| E 7 | ®Epikote 1007 (Typ 7) | 0,57 | 1750 | 13,7 |

### Phosphorsäure-Komponente P1

Erfindungsgemäß wurde das Umsetzungsprodukt von Phosphorsäure und Epoxidharz in drei Schritten hergestellt, wobei in der ersten Stufe 102 g IP und 190 g (***n***_{EP} = 1,0 mol) des Harzes EP 1 in einem geeigneten Behälter vorgemischt wurden. Sodann wurden in der Stufe 2 eine Mischung von 26 g (0,2 mol) Phosphorsäure (75 %ige Lösung in Wasser) und 30 g Isopropanol auf 50 °C erwärmt.

Unter Rühren wurde nun zu dem Produkt der Stufe 2 die Mischung gemäß der Stufe 1 während einer Stunde zulaufen gelassen, wobei die Temperatur bei 50 °C gehalten wurde (exotherme Reaktion, bei der zeitweises Kühlen erforderlich war). Nach Ende der Zugabe hielt man die Reaktionsmischung ca. zwei bis drei Stunden bei 50 °C, bis ein spezifischer Epoxidgruppengehalt von unter 0,1 mol/kg erreicht war (EEW von über 10 000 g/mol). Zuletzt wurden noch weitere 11 g Isopropanol zugegeben und die Reaktionsmischung so lange bei 80 °C gehalten, bis die Säurezahl nahezu konstant blieb. An dem erhaltenen Produkt wurden die folgenden Größen gemessen:

| | |
|---|---|
| Festkörper-Massenanteil : | ca. 66 %, |
| Staudinger-Index *J*₀: | 5,9 cm³/g, |
| Säurezahl : | 97 mg/g. |

### Phosphorsäure-Komponente P2

Die Synthese erfolgte wie oben, wobei in der Stufe 1 48 g IP, 152 g (***n***_{EP} = 0,8 mol) EP 1, und 50 g (***n***_{EP} = 0,2 mol) CE eingesetzt wurden. In der Stufe 2 wurde eine Mischung von 39 g (0,3 mol) Phosphorsäure (75 %ige Lösung in Wasser) mit 25 g IP auf 50 °C erwärmt. Die Reaktion der Produkte der beiden Stufen 1 und 2 erfolgte wie im Beispiel für P1. Es wurden die folgenden charakteristischen Werte bestimmt:

| | |
|---|---|
| Festkörper-Massenanteil (nichtflüchtiger Anteil) : | ca. 80 %, |
| Staudinger-Index *J*₀: | 5,4 cm³/g, |
| Säurezahl: | 156 mg/g |

Gemäß den Angaben in der Tabelle 2 wurden weitere Umsetzungsprodukte (Addukte BC) von Phosphorsäure H₃PO₄ ("PS") und Epoxidharzen (mit jeweils 1 mol EP-Gruppen) hergestellt:

**Tabelle 2 Umsetzungsprodukte von Epoxidharzen und Phosphorsäure**

| Beispiel | Stoffmengenverhältnis PS zu Epoxidgruppen in mol/mol | Säurezahl in mg/g | Epoxidharz | P-Gehalt im Festharz in % | Staudinger-Index *J*₀ in ml/g | Lösungsmittel |
|---|---|---|---|---|---|---|
| P 3 | 0,1 : 1 | 38 | EP 1 | 4 | 4,7 | IP |
| P 4 | 0,1 : 1 | 20 | EP 1 | 4,1 | 7,8 | IP/MEK 1:1 |
| P 5 | 0,1 : 1 | nicht bestimmt | EP 1 | nicht bestimmt | geliert | MEK |
| P 6 | 0,1 : 1 | 11 | EP 1001 | 1,8 | 14,1 | IP |
| P 7 | 0,15 : 1 | 21 | EP 1001 | 2,5 | 10,7 | IP |
| P 8 | 0,3 : 1 | 58 | EP 1001 | 5,2 | 8 | IP |
| P 9 | 0,3 : 1 | 140 | EP 1 | 12,7 | 7,2 | IP/MEK 1:1 |
| P 10 | 0,15 : 1 | 92 | HDGE | 10,6 | 4,6 | IP |
| P 11 | 0,3 : 1 | 145 | DER 736 | 12,7 | 4 | IP/MEK 1:1 |

### Blockiertes, wasserunlösliches Isocyanat (Härter H)

105 g MEKO (1,2 mol) und 0,1 g DBTL wurden unter Inertgaszufuhr auf 80 °C erwärmt und portionsweise mit 230 g (0,4 mol) ®Desmodur N 3390 versetzt. Die Reaktion verlief exotherm und wurde so lange weitergeführt, bis alle Isocyanatgruppen umgesetzt waren. Die klare Lösung hatte einen Festkörper-Massenanteil von 93 %; sie wurde mit Butylglykol noch weiter auf 80 % verdünnt.

### Addukt A1

852 g des Epoxidharzes E1 und 435 g der Phosphorsäure-Komponente P 1 wurden in einem geeigneten Reaktionsgefäß unter Rühren auf 105 °C erhitzt. Durch Destillation unter vermindertem Druck wurde nun das Lösungsmittelgemisch bis auf einen Festkörper-Massenanteil von 80 % entfernt, wobei eine hochviskose Masse zurückblieb. Danach hielt man noch 1 Stunde bei 105 °C. Eine Messung an dieser Probe ergab einen Staudinger-Index *J*₀ von 13,2 cm³/g und einen Gehalt an freien Epoxidgruppen von praktisch Null. Die gefundene Säurezahl betrug 25 mg/g. 181 g des Härter H wurden dazugegeben, die Mischung wurde 1 h bei 100 °C homogenisiert. Anschließend wurden bei 100 °C 35 g DMEA und 750 g Wasser zugegeben, die erhaltene Lösung noch eine weitere Stunde bei 70 °C homogenisiert und dann weiter bei fallender Temperatur portionsweise mit Wasser auf einen Festkörper-Massenanteil von 39 % verdünnt.

Ähnlich wie unter A 1 beschrieben wurden noch weitere Addukte **ABC** (A 2 bis A 5) hergestellt, die Mengen der Ausgangsstoffe und die Resultate sind in der Tabelle 3 zusammengestellt.

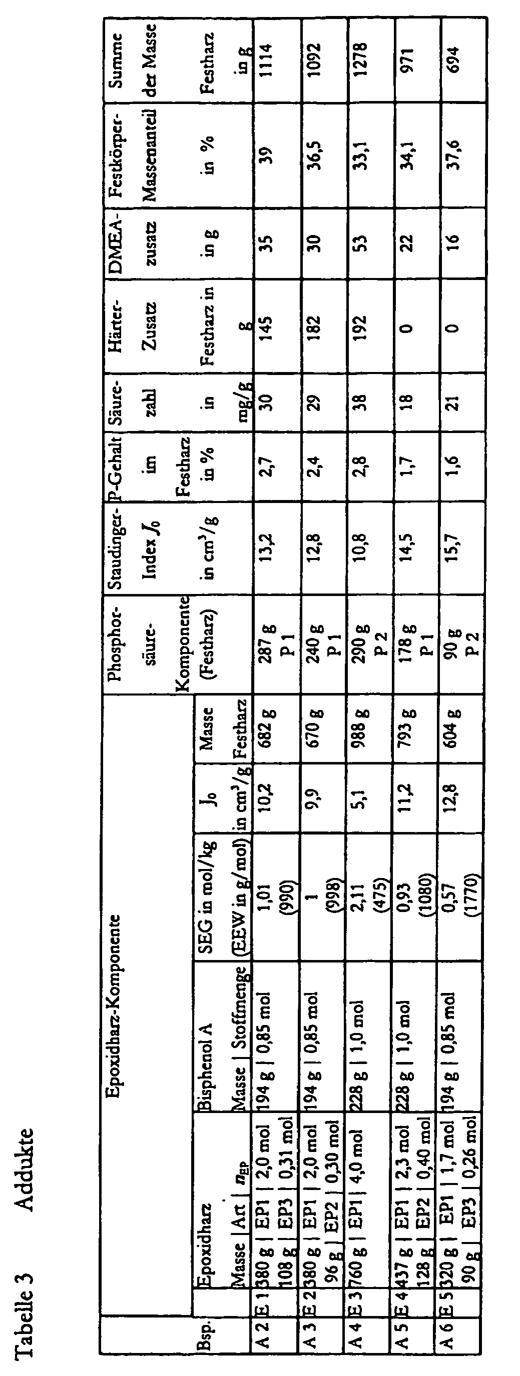

Für die lacktechnische Prüfung wurden die oben beschriebenen Addukte A1 bis A6 mit Wasser jeweils auf eine Applikationsviskosität von 800 bis 1000 mPa·s zu den Klarlacken L 1 bis L 5 eingestellt. Die so erhaltenen Klarlacke wurden mit einem Aufziehwürfel auf kaltgewalztes Feinblech so aufgezogen, daß eine Trockenfilmstärke von 20 µm resultierte.

Die Ergebnisse der lacktechnischen Prüfung sind in Tabelle 4 zusammengefaßt. Die Lackfilme zeigen durchwegs hervorragende Korrosionsschutz-Eigenschaften.

**Tabelle 4 Ergebnisse der lacktechnischen Prüfung**

| Lack | L1 | L2 | L3 | L4 | L5 | L6 |
|---|---|---|---|---|---|---|
| Schichtdicke trocken in µm | 18 | 20 | 21 | 19 | 22 | 21 |
| Härtungsbed. | 30min, 160 °C | 30 min, 160 °C | 30 min, 160 °C | 48 h, RT | 48 h, RT | 48 h, RT |
| Gitterschnitt (1) | GT 0 | GT 0 | GT 1 | GT 1 | GT 0 | GT 1 |
| Rostgrad (2) nach 336 h | 0 | 1 | 0 | 1 | 1 | 1 |
| Unterwanderung (3) in mm nach 336 h | 2 | 2,5 | 2 | 4,5 | 5,5 | 3,5 |

| | | | | | | |
|---|---|---|---|---|---|---|
| Erläuterung zu Tabelle 4 | | | | | | |
| 1 Gitterschnitt gemäß DIN 53151 | | | | | | |
| 2 Bestimmung des Rostgrades nach Salzsprühtest DIN 53167; dabei bedeutet 0 : keine Rostflecken; 1: vereinzelte Rostflecken; 2: ca. 20 % der Fläche ist von Rostffecken bedeckt; 3: ca. 40 % der Fläche ist von Rostflecken bedeckt; 4: mehr als 50 % der Fläche ist von Rostflecken bedeckt; 5: die gesamte Fläche ist rostig | | | | | | |
| 3 Unterwanderung gemäß DIN 53167 | | | | | | |

## Patentansprüche

1. Verfahren zur Herstellung von Addukten **ABC, dadurch gekennzeichnet, daß**
- in einem ersten Schritt ein Umsetzungsprodukt **BC** von einer Epoxidverbindung **B** mit einer von Phosphor abgeleiteten Säure C ausgewählt aus anorganischen sauren Phosphorverbindungen **C1** und organischen Phosphonsäuren **C2** hergestellt wird, wobei die Verbindungen **B** und **C** in solchen Mengen eingesetzt werden, daß das Stoffmengenverhältnis von aciden Wasserstoffatomen in **C** zu Epoxidgruppen in **B** 0,3 bis 0,9 zu 1 beträgt, und das Umsetzungsprodukt **BC** mindestens eine saure Phosphorsäureestergruppe oder Phosphonsäureestergruppe pro Molekül enthält,
- in einem zweiten Schritt das Umsetzungsprodukt **BC** mit einer Epoxidverbindung **A** zu einem Addukt **ABC** umgesetzt wird, wobei die Reaktion so lange geführt wird, bis der spezifische Epoxidgruppengehalt, bezogen auf den Festkörper der Reaktionsmischung, weniger als 100 mol/kg beträgt,
wobei die Epoxidverbindungen **A** und **B** unabhängig voneinander aus Di- und Polyepoxidverbindungen ausgewählt werden.

2. Zusammensetzungen enthaltend Wasser und in Wasser dispergierte neutralisierte Addukte **ABC** herstellbar gemäß Anspruch 1, mit einem Massenanteil, bezogen auf die Masse des Addukts **ABC,** von maximal 5 % an nicht umgesetzter Säure C.

3. Zusammensetzungen nach Anspruch 2, **dadurch gekennzeichnet, daß** die Säurezahl der Addukte **ABC** ca. 10 mg/g bis ca. 70 mg/g beträgt.

4. Zusammensetzungen nach Anspruch 2, **dadurch gekennzeichnet, daß** der Massenanteil an Phosphor in den Addukten ABC zwischen 0,8 % und 4 % beträgt.

5. Zusammensetzungen nach Anspruch 2, **dadurch gekennzeichnet, daß** der Staudinger-Index der Addukte ABC 8,0 cm³/g bis 20,0 cm³/g beträgt.

6. Zusammensetzungen nach Anspruch 2, **dadurch gekennzeichnet, daß** die Addukte **ABC** Bausteine enthalten abgeleitet von Epoxidverbindungen abgeleitet von Bisphenol A und/oder Bisphenol F.

7. Zusammensetzungen nach Anspruch 2, **dadurch gekennzeichnet, daß** die Addukte **ABC** Bausteine abgeleitet von ortho-Phosphorsäure enthalten.

8. Verwendung der Zusammensetzungen nach Anspruch 2 zur Herstellung von wäßrigen Einkomponenten-Lacken, wobei die Addukte **ABC** mit einem durch Erwärmen aktivierbaren Härter ausgewählt aus Aminoplastharzen, Phenol-Formaldehyd-Harzen und blockierten Isocyanaten vermischt werden, durch Zugabe von Neutralisationsmitteln die verbliebenen sauren Gruppen zumindest teilweise neutralisiert werden und die Mischung in Wasser dispergiert wird.

9. Verwendung der Zusammensetzungen nach Anspruch 2 zur Herstellung von wäßrigen Zweikomponenten-Lacken, wobei die Addukte **ABC** durch Zugabe von Neutralisationsmitteln zumindest teilweise neutralisiert werden und in Wasser dispergiert werden, und wobei unmittelbar vor der Applikation unblockierte mehrfunktionelle Isocyanate oder Aminoplastharze mit dieser Dispersion innig vermischt werden.

10. Verwendung der Zusammensetzungen nach Anspruch 2 zur Herstellung von wäßrigen physikalisch trocknenden Lacken, wobei die Addukte **ABC** durch Zugabe von Neutralisationsmitteln zumindest teilweise neutralisiert werden und dann in Wasser dispergiert werden.

## Claims

1. A process for preparing adducts **ABC** which are dispersible in water after neutralization, which comprises
- in a first step preparing a reaction product **BC** of an epoxide compound **B** with a phosphorus-derived acid **C** selected from inorganic acidic phosphorus compounds **C1** and organic phosphonic acids **C2**, the compounds **B** and **C** being used in amounts such that the amount-of-substance ratio of acidic hydrogen atoms in **C** to epoxide groups in **B** is 0.3 to 0.9:1, and the reaction product BC comprises at least one acidic phosphoric acid ester group or phosphonic acid ester group per molecule,
- in a second step reacting the reaction product **BC** with an epoxide compound **A** to give an adduct **ABC**, the reaction being continued until the specific epoxide group content, based on the solids of the reaction mixture, is less than 100 mmol/kg,
the epoxide compounds **A** and **B** independently of one another being selected from di- and polyepoxide compounds.

2. Compositions comprising water and water-dispersed neutralized adducts **ABC** which can be prepared as claimed in claim 1, having a mass fraction, based on the mass of the adduct **ABC,** of not more than 5 % of unreacted acid **C.**

3. Compositions as claimed in claim 2, wherein the acid number of the adducts **ABC** is from approximately 10 mg/g to approximately 70 mg/g.

4. Compositions as claimed in claim 2, wherein the mass fraction of phosphorus in the adducts **ABC** is between 0.8 % and 4 %.

5. Compositions as claimed in claim 2, wherein the Staudinger index in the adducts **ABC** is from 8.0 cm³/g to 20.0 cm³/g.

6. Compositions as claimed in claim 2, wherein the adducts **ABC** comprise units derived from epoxide compounds derived from bisphenol A and/or bisphenol F.

7. Compositions as claimed in claim 2, wherein the adducts **ABC** comprise units derived from orthophosphoric acid.

8. The use of the compositions as claimed in claim 2 for preparing aqueous one-component coating materials, the adducts **ABC** being mixed with a heat-activable curative selected from amino resins, phenolformaldehyde resins, and blocked isocyanates, the remaining acidic groups being at least partly neutralized by addition of neutralizing agents, and the mixture being dispersed in water.

9. The use of the compositions as claimed in claim 2 for preparing aqueous two-component coating materials, the adducts **ABC** being at least partly neutralized by addition of neutralizing agents and dispersed in water and this dispersion being intimately mixed immediately prior to application with nonblocked polyfunctional isocyanates or amino resins.

10. The use of the compositions as claimed in claim 2 for preparing aqueous physically drying coating materials, the adducts **ABC** being at least partly neutralized by the addition of neutralizing agents and then dispersed in water.

## Revendications

1. Procédé pour la préparation d'adduits ABC, qui sont dispersables dans l'eau après neutralisation, **caractérisé en ce que**
- dans une première étape, on prépare un produit de réaction BC d'un époxyde B avec un acide C dérivé du phosphore, choisi parmi les composés phosphorés inorganiques acides C1 et les acides phosphoniques organiques C2, où les composés B et C sont utilisés en quantités telles que le rapport des quantités d'atomes d'hydrogène acides dans C aux groupes époxy dans B va de 0,3:1 à 0,9:1, et le produit de réaction BC contient au moins un groupe ester d'acide phosphorique ou groupe ester d'acide phosphonique par molécule,
- dans une seconde étape on fait réagir le produit de réaction BC avec un époxyde A pour obtenir un adduit ABC, la réaction étant effectuée jusqu'à ce que la teneur spécifique en groupes époxy, par rapport à la matière solide du mélange réactionnel, soit inférieure à 100 mmol /kg,
les époxydes A et B étant choisis, indépendamment l'un de l'autre, parmi des diépoxydes et des polyépoxydes.

2. Compositions contenant de l'eau et des adduits ABC neutralisés, dispersés dans l'eau, pouvant être préparés selon la revendication 1, ayant une teneur massique, par rapport à la masse de l'adduit ABC, d'au maximum 5 % en acide C n'ayant pas réagi.

3. Compositions selon la revendication 2, **caractérisées en ce que** l'indice d'acide des adduits ABC va d'environ 10 mg/g à environ 70 mg/g.

4. Compositions selon la revendication 2, **caractérisées en ce que** la teneur massique en phosphore des adduits ABC va de 0,8 % à 4 %.

5. Compositions selon la revendication 2, **caractérisées en ce que** l'indice de Staudinger des adduits ABC va de 8,0 cm³/g à 20,0 cm³/g.

6. Compositions selon la revendication 2, **caractérisées en ce que** les adduits ABC contiennent des éléments structuraux dérivés d'époxydes dérivés du bisphénol A et/ou du bisphénol F.

7. Compositions selon la revendication 2, **caractérisées en ce que** les adduits ABC contiennent des éléments structuraux dérivés d'acide orthophosphorique

8. Utilisation des compositions selon la revendication 2, pour la préparation de peintures à l'eau de type laque monocomposant, où les adduits ABC sont mélangés avec un durcisseur activable par chauffage, choisi parmi des aminoplastes, des résines phénol-formaldéhyde et des isocyanates bloqués, les groupes acides restants étant au moins partiellement neutralisés par addition d'agents de neutralisation et le mélange étant dispersé dans l'eau.

9. Utilisation des compositions selon la revendication 2, pour la production de peintures à l'eau de type laque bicomposant, où les adduits ABC sont au moins partiellement neutralisés par addition d'agents de neutralisation et dispersés dans l'eau, et où des aminoplastes ou des isocyanates polyfonctionnels non bloqués sont intimement mélangés avec cette dispersion immédiatement avant l'application.

10. Utilisation des compositions selon la revendication 2, pour la production de peintures à l'eau séchant physiquement, les adduits ABC étant au moins partiellement neutralisés par addition d'agents de neutralisation et ensuite dispersés dans l'eau.
